# EUROPÄISCHE PATENTSCHRIFT

(11) **EP 1 989 715 B1**
(45) Veröffentlichungstag und Bekanntmachung des Hinweises auf die Patenterteilung: **22.06.2011**
(21) Anmeldenummer: 07722892.2
(22) Anmeldetag: 22.02.2007
(51) Int. Cl.: G21C 3/33, G21C 3/334, G21C 3/34

(54) **BRENNELEMENT FÜR EINEN LEICHTWASSERREAKTOR**
COMBUSTION ELEMENT FOR A LIGHT-WATER REACTOR
ELEMENT DE COMBUSTIBLE POUR REACTEUR A EAU LEGERE

(30) Priorität: 02.03.2006 DE 102006009598; 05.04.2006 DE 102006015868
(43) Veröffentlichungstag der Anmeldung: 12.11.2008
(73) Patentinhaber: AREVA NP GmbH, 91052 Erlangen (DE)
(72) Erfinder: GALSTER, Georg, 91056 Erlangen (DE); WILDENAUER, Joachim, 91325 Adelsdorf (DE); FRIEDRICH, Erhard, 90542 Eckental (DE); RUDOLPH, Matthias, 91085 Weisendorf (DE)
(74) Vertreter: Mörtel, Alfred
(86) Internationale Anmeldenummer: PCT/EP2007/001516
(87) Internationale Veröffentlichungsnummer: WO 2007/098879

(56) Entgegenhaltungen:
- EP-A- 0 908 898
- EP-A1- 0 240 411
- DE-A1- 4 422 823
- FR-A- 2 633 436

## Beschreibung

Die Erfindung bezieht sich auf ein Brennelement für einen Leichtwasserreaktor, wie es beispielsweise aus der DE 36 32 153 C2 bekannt ist.

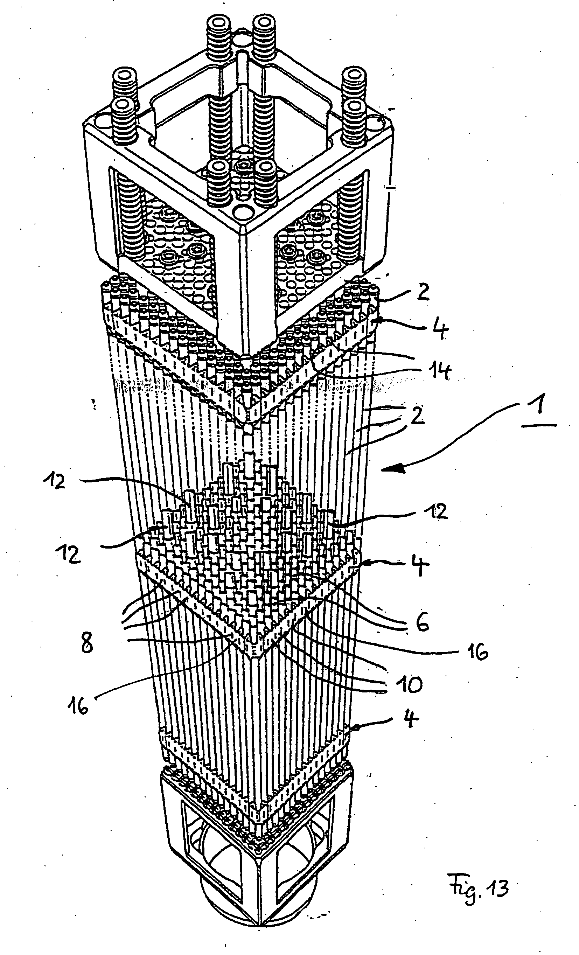

Der prinzipielle Aufbau eines Brennelementes ist exemplarisch für einen Druckwasserkernreaktor in Fig. 13 veranschaulicht. Bei einem solchen Brennelement sind eine Vielzahl von Brennstäben 2 in Stabrichtung (axial) parallel zueinander durch mehrere, voneinander axial beabstandete Abstandhalter 4 geführt, die jeweils ein zweidimensionales Gitter mit einer Mehrzahl von Zellen 6 bilden, die in Spalten 8 und Reihen 10 angeordnet sind. Durch die Zellen 6 dieses Gitters sind außer den Brennstäben 2 auch an ausgewählten Positionen Stützrohre hindurch geführt, die keinen Brennstoff enthalten und zur Aufnahme und zum Führen von Steuerstäben (sog. Steuerstabführungsrohre 12) vorgesehen sind. Außerdem können noch Stützrohre vorhanden sein, die ebenfalls keinen Brennstoff enthalten und lediglich zur Erhöhung der Stabilität dienen (Instrumentierungsrohre oder Strukturrohre, im beispielhaft dargestellten Brennelement 1 sind weder Instrumentierungsrohre noch Strukturrohre vorgesehen). Diese Stützrohre sind anders als die Brennstäbe in den Zellen 6 mit den Abstandhaltern 4 verschweißt oder in ähnlicher Weise fest verbunden, so dass ihre stabilisierende Wirkung über die gesamte Einsatzdauer des Brennelements 1 gewährleistet ist.

Die Abstandhalter 4 sind aus sich kreuzenden Innenstegen 14 aufgebaut und weisen an ihren seitlichen Rändern Rand- oder Außenstege 16 auf. Sowohl während des Betriebes als auch bei der Handhabung der Brennelemente können in sehr seltenen Fällen die Abstandhalter derart beschädigt werden, dass die Rand- oder Außenstege 16 der Abstandhalter 4 durch Reibverschleiß oder Verhaken bei der Handhabung vollständig oder teilweise durchtrennt werden.

Um den in den Brennstäben vorhandenen noch nicht abgebrannten Brennstoff auch ohne ein komplettes Zerlegen des Brennelementes weiter nutzen zu können, ist es aus der DE 36 32 153 C2 bekannt, bei einem an einer Ecke beschädigten Abstandhalter auf die an diese Ecke befindliche Achse oder Zelle eine Reparaturhülse aufzusetzen, die mit der Zelle fluchtet. Diese Reparaturhülse wird mit zwei Blattfedern, die die Innenstege dieser Zelle hintergreifen und in das Innere in die Zelle hineinragende und als starre Anlagennoppen dienende Ausformungen einrasten, so dass die Reparaturhülse über der Zelle fixiert ist.

Bei diesem bekannten Konzept wird zwar eine sichere Lagerung des durch die Hülse geführten Stabes, entweder ein Brennstab oder ein Dummy- oder Leerstab, wiederhergestellt, jedoch erfolgt die Stablagerung nach dem Einsatz der Reparaturhülse außerhalb der von den oberen oder unteren Kanten der Stegflächen festgelegten Abstandhalterebenen. Darüber hinaus wird aber durch die bekannte Lösung die Abstützung der Brennelemente untereinander als auch deren Handhabung nicht verbessert.

Weiterhin sind Reparaturhülsen für Brennelemente aus der Offenbarungsschrift FR 2 633 436 A bekannt.

Der Erfindung liegt nun die Aufgabe zu Grunde, ein mit einer Reparaturhülse versehenes Brennelement für einen Leichtwasserreaktor anzugeben, bei dem nicht nur die Stablagerung sondern auch die Handhabung und Abstützung der Brennelemente untereinander verbessert ist.

Die genannte Aufgabe wird gemäß der Erfindung gelöst mit einem Brennelement mit den Merkmalen des Patentanspruches 1. Gemäß diesen Merkmalen weist ein Randsteg eines Abstandhalters im bereich einer Zelle eine nach einer Beschädigung eingebrachte Ausnehmung auf, wobei in die Zelle eine Reparaturhülse mit einer in die Ausnehmung ragenden Außenfläche eingesetzt ist, die flächenbündig mit der unbeschädigten Außenfläche des Abstandhalters verläuft. Durch diese Maßnahme wird durch die Reparaturhülse die Außenkontur des Abstandhalters wiederhergestellt, so dass das reparierte Brennelement sowohl hinsichtlich seiner Handhabung als auch hinsichtlich seiner Abstützung zu den anderen Brennelementen die gleichen Eigenschaften wie ein unbeschädigtes Brennelement aufweist.

Vorteilhafte Ausgestaltung der Erfindung sind in den Unteransprüchen angegeben.

Zur weiteren Erläuterung der Erfindung wird auf die Ausführungsbeispiele der Zeichnung verwiesen. Es zeigen:
- Fig. 1a, b: jeweils eine perspektivische Darstellung einer ersten Ausführungsform einer erfindungsgemäßen Reparaturhülse in verschiedenen Drehpositionen,
- Fig. 2a, b: jeweils perspektivische Darstellungen der in Fig. 1a, b dargestellten Reparaturhülse im eingebauten Zu- stand,
- Fig. 3: eine weitere Ausführungsform einer erfindungsgemäßen Reparaturhülse ebenfalls in einer perspektivischen Darstellung,
- Fig. 4: die in ein Abstandhalter eingebaute Reparaturhülse gemäß Fig. 3,
- Fig. 5: eine dritte Ausführungsform einer erfindungsgemäßen Reparaturhülse,
- Fig. 6: die Reparaturhülse gemäß Fig. 5 im eingebauten Zu- stand,
- Fig. 7: eine vierte Ausführungsform einer Reparaturhülse gem. der Erfindung,
- Fig. 8: die in Fig. 7 dargestellte Reparaturhülse im eingebau- ten Zustand,
- Fig. 9: eine weitere Variante einer erfindungsgemäßen Repara- turhülse, die für den Einsatz in einer Zelle geeignet ist, die sich nicht an einer Ecke des Abstandhalters befindet,
- Fig. 10: die Reparaturhülse gemäß Fig. 9 im eingebauten Zu- stand,
- Fig. 11a, b: eine vereinfachte Ausführungsform einer erfindungs- gemäßen Reparaturhülse, die für den Einsatz in einer Eckzelle mit intakter Haltefeder geeignet ist,
- Fig. 12: die Reparaturhülse gemäß Fig. 11a, b im eingebauten Zustand,
- Fig. 13: ein Brennelement eines Druckwasserkernreaktors in einer schematischen perspektivischen Darstellung.

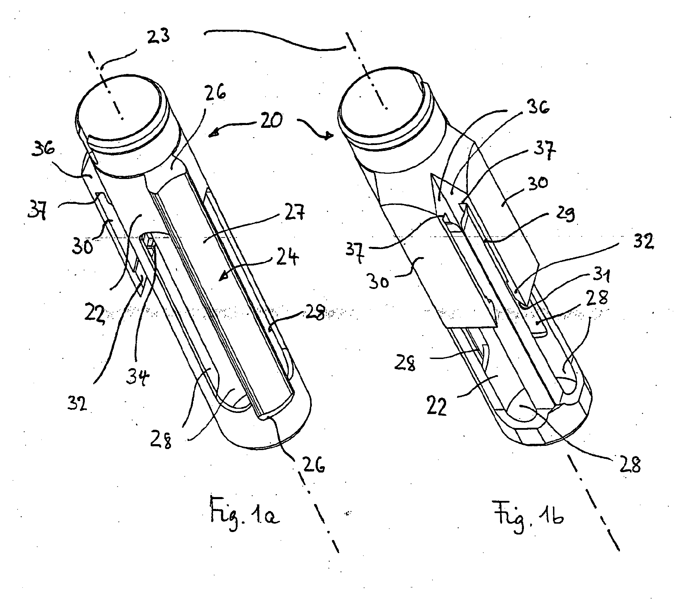

Im Ausführungsbeispiel gemäß Fig. 1a, b besteht eine zum Einsetzen in eine Zelle an einer Ecke eines Abstandhalters vorgesehene Reparaturhülse 20 aus einem im wesentlichen hohlzylindrischen Grundkörper 22, der an seinem Außenumfang mit einem sich in seine Längsrichtung 23 erstreckenden radial vorstehenden axialen Steg oder radialen Vorsprung 24 versehen ist. Der Vorsprung 24 ist an seinen axial gegenüberliegenden Stirnflanken 26 mit einer Schräge versehen. Die Außenfläche 27 des Vorsprungs 24 ist plan und an die Außenfläche oder -Kontur des unbeschädigten Abstandhalters angepasst.

Die Reparaturhülse 20 weist außerdem an ihrem Umfang vier sich in Längsrichtung, d.h. parallel zu einer axialen Mittenachse 23 erstreckende Aussparungen 28 auf, bezogen auf diese Längsrichtung 23 die jeweils in einem Winkelstand von 90° voneinander am Außenumfang des hohlzylindrischen Grundkörpers 22 angeordnet sind. Abhängig von der Konstruktion des zu ertüchtigenden Abstandhalters kann die exakte Winkellage und Zahl der Aussparungen variieren.

In einem Winkelabstand von 90° sind am Außenumfang des Grundkörpers 22 zwei sich ebenfalls in Längsrichtung erstreckende und vom Grundkörper 22 durch einen Spalt 29 beabstandete Feder- oder Klemmzungen 30 in der Art eines Clips angeordnet, die an ihrem freien Ende einen nach innen weisenden und mit einer Einführschräge 31 versehenen Absatz 32 aufweisen, und deren Winkelabstand zum Steg 24 jeweils bezogen auf die axiale Mittenachse 23 135° beträgt. An der Innenseite dieser Klemmzunge 30 ist außerdem eine Rastnase 34 angeordnet.

Die Klemmzunge 30 ist über eine Schulter 36 am Grundkörper 22 angeformt, die zugleich eine axiale Anschlagfläche 37 für einen in den Spalt 29 eingeführten Innensteg bildet.

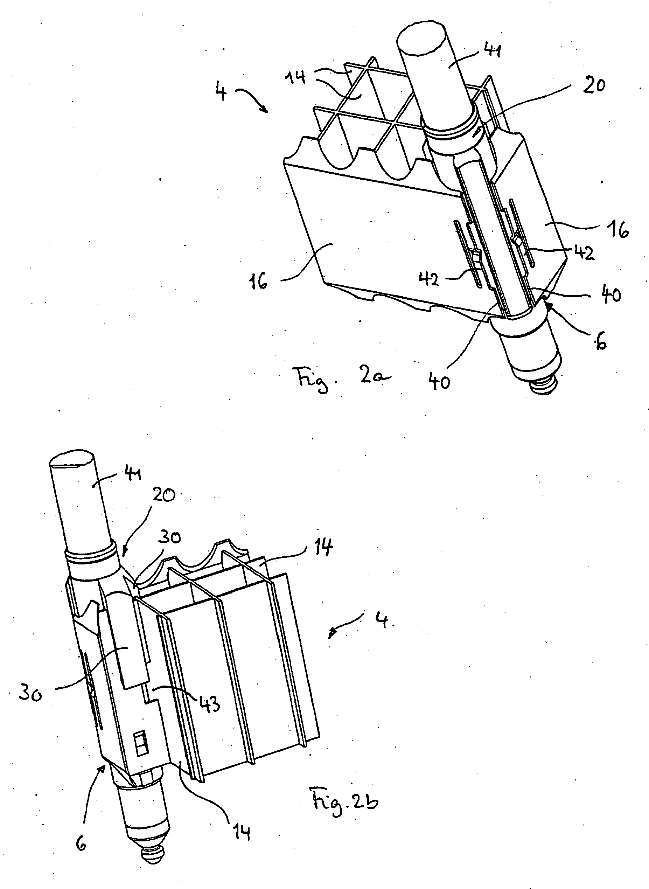

Fig. 2a und b zeigen die Reparaturhülse 20 im eingebauten Zustand, in dem sie in eine Zelle 6 an einer Ecke (Eckzelle) des Abstandhalters 4 (Eckzelle) eingesetzt ist. Der Fig. 2a ist zu entnehmen, dass die Randstege 16 des Abstandhalters 4 an einer Ecke jeweils mit einer definierten Ausnehmung 40 versehen sind, deren Ausdehnung an die Breite des Vorsprungs 24 angepasst ist. Der Vorsprung 24 füllt diese Ausnehmung 40 aus und stellt die ursprüngliche, angeschrägte Außenkontur der Außenfläche des Abstandhalters 4 im Bereich der Ecke wieder her. In Fig. 2b ist darüber hinaus zu erkennen, dass die Klemmzungen 30 die zur Eckzelle gehörenden Innenstege 14 umgreifen und die Reparaturhülse 20 und damit den in diese eingeschobenen Stab 41 gemeinsam mit den in den Randstegen 16 verbliebenen Haltefedern 42 radial federnd in der Eckzelle lagern. Die an den Klemmzungen 30 angebrachten Rastnasen 34 (Fig. 1a) verhaken sich in einer an den Innenstegen befindlichen, oder auch nachträglich eingebrachten Öffnung 43, so dass die Reparaturhülse 20 axial (in Längsrichtung) durch die an der Schulter 36 der Klemmzunge 30 gebildete, an der oberen Kante der Innenstege 14 anliegende Anschlagfläche 37 und die Rastnase 34 gesichert ist.

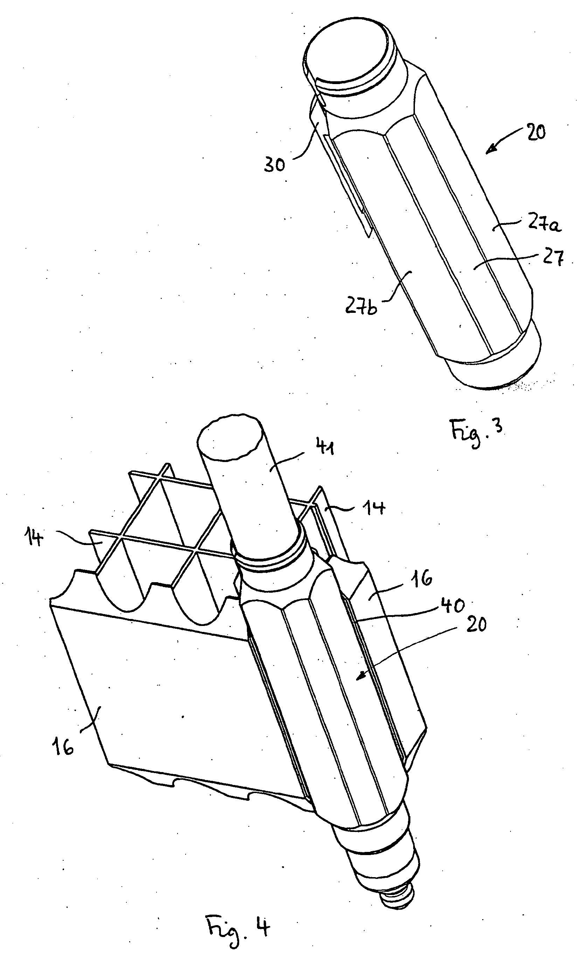

Im Ausführungsbeispiel einer Reparaturhülse 20 gemäß Fig. 3 ist ein verbreiterter Vorsprung 24 vorgesehen, der drei plane Außenflächen 27,27a,27b aufweist, die dem Konturverlauf der Randstege 16 des Abstandhalters 4 an der gesamten Außenfläche einer Eckzelle nachbilden, wie dies aus Fig. 4 hervorgeht. In diesem Ausführungsbeispiel sind die Randstege 16 an einer defekten Ecke des Abstandhalters jeweils ausgehend von der Ecke vollständig bis zum nächstliegenden Innensteg 14 abgetragen worden. Mit anderen Worten: Die Ausnehmung 40 erstreckt sich von der Ecke bis zum jeweiligen nächstliegenden Innensteg 14.

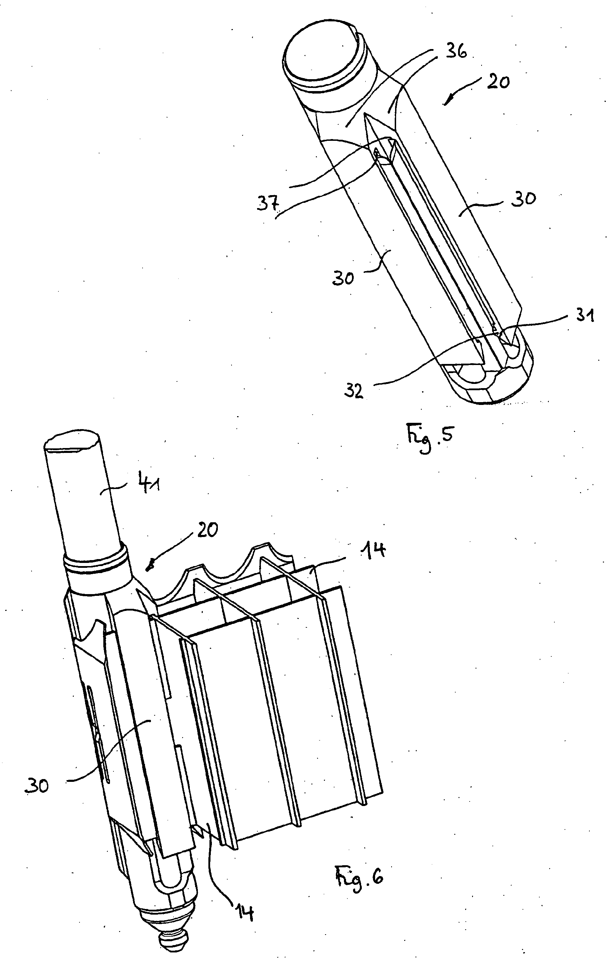

In den Ausführungsbeispielen gemäß Fig. 5 und 6 ist die Klemmzunge 30 an die Höhe der Innenstege 14 derart angepasst, dass der an ihrem freien Ende angeordnete Vorsprung 31 die Unterkante des jeweiligen Innensteges 14 hintergreift und auf diese Weise gemeinsam mit der durch die Schulter 36 gebildeten Anschlagfläche 37 die Reparaturhülse 20 axial fixiert, wie dies in Fig. 6 zu erkennen ist.

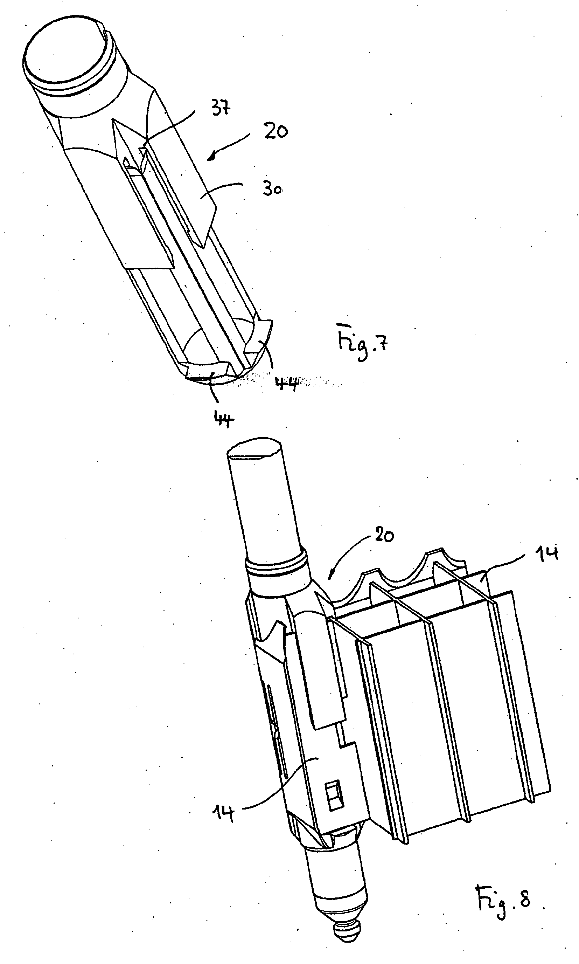

Beim Ausführungsbeispiel gemäß Fig. 7 und 8 ist die Reparaturhülse 20 an ihrem einen Ende mit einem Vorsprung 44 versehen, der bei in die Eckzelle eingeführter Reparaturhülse 20 die Unterkante des Innensteges 14 hintergreift und auf diese Weise gemeinsam mit der von der federnden Klemmzunge 30 gebildeten axialen Anschlagfläche 37 ebenfalls zu einer axialen Fixierung der Reparaturhülse 20 führt.

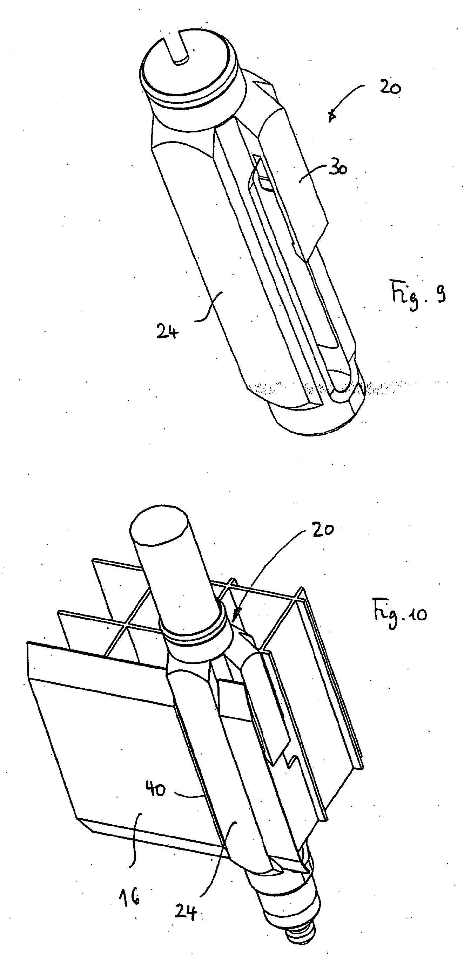

In den Ausführungsbeispielen gemäß Fig. 9 und 10 ist die Reparaturhülse mit einem Vorsprung 24 versehen, der im Winkel von 90° zu einer der Klemmzungen 30 angeordnet ist und zur Reparatur des Randsteges 16 in einem Bereich außerhalb einer Ecke vorgesehen ist. Auch in diesem Fall wird der Randsteg 16 mit einer die beschädigende Stelle abtragenden Ausnehmung 40 versehen, die an die Breite des Vorsprungs 24 angepasst ist.

Die in den Fig. 1-10 dargestellten Reparaturhülsen sind jeweils mit zwei Klemmzungen versehen, die kreuzende Innenstege einer Zelle hintergreifen. Alternativ hierzu ist es auch möglich, eine einzige Klemmzunge vorzusetzen, die bei eingebauter Reparaturhülse in eine diagonal benachbarte Zelle hineinragt und dort an den Innenseiten der Innenstege anliegt.

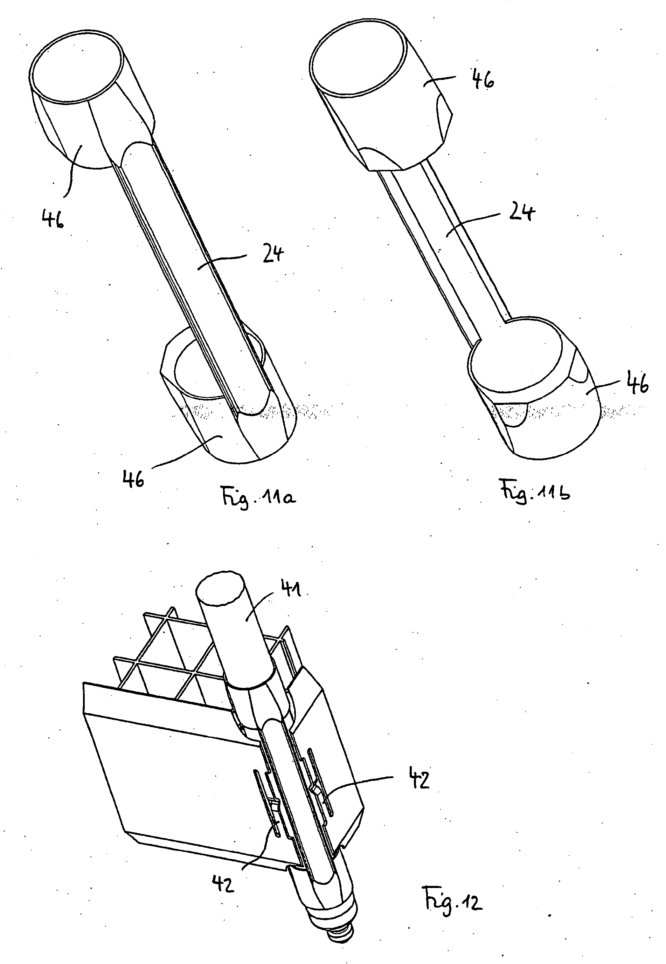

In der Ausführungsform gemäß Fig. 11a, b und 12 umfasst die Reparaturhülse 20 zwei axial beabstandete Führungsringe 46, die über den stegförmigen Vorsprung 24 miteinander verbunden sind. In dieser Ausführungsform ist die Reparaturhülse 20 und für die Reparatur einer Eckzelle mit intakten Haltefedern 42 vorgesehen. Die Fixierung der Reparaturhülse 20 in der Eckzelle wird in diesem Ausführungsbeispiel ausschließlich über die reibschlüssige Verbindung mit dem durch die Reparaturhülse hindurchgeführten und in der Eckzelle ausschließlich über die noch intakten, in den Randstegen befindlichen Haltefedern 42 radial federnd gelagerten Stab 41 bewirkt.

## Patentansprüche

1. Brennelement für einen Leichtwasserreaktor, mit einer Vielzahl von Brennstäben, die in einer Mehrzahl von axial beabstandeten Abstandhaltern (4) geführt sind, die jeweils ein aus Gitterstegen (14,16) aufgebautes Gitter mit einer Vielzahl von Zellen (6) bilden, die in Reihen (10) und Spalten (8) angeordnet sind, und bei dem ein Randsteg (16) eines Abstandhalters (4) im Bereich einer Zelle (6) eine nach einer Beschädigung eingebrachte Ausnehmung (40) aufweist, und in die Zelle (6) eine Reparaturhülse (20) mit einer in die Ausnehmung (40) ragenden Außenfläche eingesetzt ist,
**dadurch gekennzeichnet, dass** die Außenfläche der Reparaturhülse (20) flächenbündig mit der unbeschädigten Außenfläche des Abstandhalters (4) verläuft.

2. Brennelement nach Anspruch 1, bei dem die Reparaturhülse (20) an ihrem Außenumfang einen sich in ihre Längsrichtung erstreckenden radialen Vorsprung (24) aufweist, der in die Ausnehmung (40) hineinragt.

3. Brennelement nach Anspruch 1 oder 2, bei dem die Reparaturhülse (20) zumindest eine Rastnase (34) aufweist, die eine in einem unbeschädigten Innensteg (14) befindliche Kante hintergreift.

4. Brennelement nach Anspruch 3, bei dem die Kante von einer im Innensteg (14) befindlichen Öffnung (43) gebildet ist.

5. Brennelement nach Anspruch 3, bei dem die Kante durch die Unterkante des Innensteges (14) gebildet ist.

6. Brennelement nach einem der vorhergehenden Ansprüche, bei dem die Reparaturhülse (20) über die Ober- und Unterkante der Zelle (6) hinausragt.

7. Brennelement nach einem der vorhergehenden Ansprüche, bei dem die Reparaturhülse (20) wenigstens eine an ihrem Außenumfang angeordnete und sich in Längsrichtung erstreckende Klemmzunge (30) aufweist, die über einen Innensteg (14) geschoben ist und die Reparaturhülse (20) in der Zelle (6) fixiert.

## Claims

1. Fuel assembly for a light water reactor, comprising a multiplicity of fuel rods which are guided in a plurality of axially spaced spacers (4) that form in each case a grid which is composed of grid webs (14, 16) and has a multiplicity of cells (6) arranged in rows (10) and columns (8), and in which an edge web (16) of a spacer (4) has in the region of a cell (6) a cutout (40) which is introduced after damage has occurred, and a repair sleeve (20) having an external surface protruding into the cutout (40) is inserted into the cell (6), **characterized in that** the external surface of the repair sleeve (20) extends flush with the undamaged external surface of the spacer (4).

2. Fuel assembly according to Claim 1, in which the repair sleeve (20) has on its outer circumference a radial protrusion (24) which extends in the longitudinal direction of the repair sleeve (20) and protrudes into the cutout (40).

3. Fuel assembly according to Claim 1 or 2, in which the repair sleeve (20) has at least one latching lug (34) which engages behind a rim located in an undamaged internal web (14).

4. Fuel assembly according to Claim 3, in which the rim is formed by an opening (43) located in the internal web (14).

5. Fuel assembly according to Claim 3, in which the rim is formed by the lower rim of the internal web (14).

6. Fuel assembly according to one of the preceding claims, in which the repair sleeve (20) projects beyond the upper and lower rims of the cell (6).

7. Fuel assembly according to one of the preceding claims, in which the repair sleeve (20) has at least one clamping tongue (30) which is arranged on the outer circumference of the repair sleeve (20) and extends in the longitudinal direction, wherein the clamping tongue (30) is pushed over an internal web (14) and fixes the repair sleeve (20) in the cell (6).

## Revendications

1. Assemblage de combustible pour un réacteur à eau légère, comprenant une pluralité de barres de combustible, qui sont guidées dans une pluralité d'espaceurs (4) espacés axialement formant une grille constituée de traverses de grille (14, 16) avec une pluralité de cellules (6) disposées en rangées (10) et colonnes (8), et dans lequel une traverse de bordure (16) d'un espaceur (4) présente dans la zone d'une cellule (6) un évidement (40) produit après une détérioration, et un manchon de séparation (20) comprenant une surface extérieure dépassant dans l'évidement (40) est inséré dans la cellule (6), **caractérisé en ce que** la surface extérieure du manchon de séparation (20) est agencée de sorte qu'elle effleure la surface extérieure non endommagée de l'espaceur (4).

2. Assemblage de combustible selon la revendication 1, dans lequel le manchon de réparation (20) présente sur son pourtour extérieur une saillie (24) radiale s'étendant dans sa direction longitudinale qui dépasse dans l'évidement (40).

3. Assemblage de combustible selon la revendication 1 ou 2, dans lequel le manchon de réparation (20) présente au moins un nez d'encliquetage (34) qui saisit à l'arrière une arête se trouvant dans une traverse intérieure (14) non endommagée.

4. Assemblage de combustible selon la revendication 3, sur lequel l'arête est formée par une ouverture (43) se trouvant dans la traverse intérieure (14).

5. Assemblage de combustible selon la revendication 3, dans lequel l'arête est formée par l'arête inférieure de la traverse intérieure (14).

6. Assemblage de combustible selon l'une quelconque des revendications précédentes, sur lequel le manchon de réparation (20) dépasse de l'arête supérieure et de l'arête inférieure de la cellule (6).

7. Assemblage de combustible selon l'une quelconque des revendications précédentes, sur lequel le manchon de réparation (20) présente au moins une lame de serrage (30) disposée sur son pourtour extérieur et s'étendant dans le sens longitudinal, qui est glissée au moyen d'une traverse intérieure (14) et fixe le manchon de réparation (20) dans la cellule (6).
